# EUROPÄISCHE PATENTANMELDUNG

(11) **EP 4 835 451 A1**
(43) Veröffentlichungstag der Anmeldung: **04.11.2026**
(21) Anmeldenummer: 25173394.5
(22) Anmeldetag: 29.04.2025
(51) Int. Cl.: G01N 21/78, B01D 51/00, G01N 21/77

(54) **VERFAHREN ZUR ERKENNUNG EINES BELADUNGSZUSTANDS EINES ADSORPTIONSELEMENTS MIT EINEM GAS UND VERWENDUNG EINES FARBVERÄNDERLICHEN MEDIUMS**

(71) Anmelder: MANN+HUMMEL Ventures Pte. Ltd., Singapore 139234 (SG)
(72) Erfinder: BEYLICH, Markus, 71636 Ludwigsburg (DE); SCOPE, Andreas, 71636 Ludwigsburg (DE)
(74) Vertreter: Mann + Hummel Intellectual Property

(57) **Zusammenfassung**

Die Erfindung betrifft ein Verfahren zur Erkennung eines Beladungszustands eines Adsorptionselements (10) mit einem Gas, wobei das Adsorptionselement (10) einen Mediumkörper (12) mit einem Adsorptionsmittel (20) aufweist, welcher mit einem Fluid, insbesondere Luft, welches das Gas aufweist, angeströmt wird, wobei der Mediumkörper (12) wenigstens bereichsweise ein farbveränderliches Medium (30) aufweist. Dabei wird eine spektrale Farbänderung des farbveränderlichen Mediums (30) abhängig von einem Beladungszustand mit dem Gas bestimmt.

Die Erfindung betrifft ferner eine Verwendung eines farbveränderlichen Mediums (30) zur Erkennung eines Beladungszustands eines Adsorptionselements (10) mit einem Gas.

## Beschreibung

### Technisches Gebiet

Die Erfindung betrifft ein Verfahren zur Erkennung eines Beladungszustands eines Adsorptionselements mit einem Gas, sowie eine Verwendung eines farbveränderlichen Mediums zur Erkennung eines Beladungszustands eines Adsorptionselements mit einem Gas.

### Stand der Technik

Adsorptionsfilter werden beispielsweise in Kraftfahrzeugen eingesetzt, um Kraftstoffdämpfe des Kraftstofftanks zu adsorbieren und sind beispielsweise in Tankentlüftungsleitungen angeordnet, um eine unerwünschte Emission von Kohlenwasserstoffen durch die Entlüftungsleitung in die Umgebung zu vermeiden.

Weiter benötigen Brennstoffzellensysteme, insbesondere bei Kraftfahrzeugen, häufig einen Partikelfilter und einen Sorptionsfilter, um sowohl Partikel als auch Schadgase aus der Ansaugluft auf der Kathodenseite zu filtern.

Zur Gasadsorption mittels großer Oberflächen mit kleinsten Kavitäten können Materialien wie beispielsweise Aktivkohle oder Zeolithe oder sogenannte metallorganische Gerüstverbindungen, so genannte MOF-Werkstoffe (MOF = Metal-Organic-Framework), eingesetzt werden.

Nach einer gewissen Zeit tritt jedoch, abhängig von Reaktionsfreudigkeit und Konzentration des Gases, eine nachlassende Adsorption des Gases ein, da die Oberfläche weitgehend belegt ist. In der Mehrzahl der heutigen Anwendungsfälle wird der Filter dann getauscht. Eine andere Möglichkeit ist, den Filter zu regenerieren. Häufig geschieht diese Regeneration mittels Wärme, z. B. durch Desorption durch Ausheizen. Bekannt sind Messungen der Reingaskonzentration zur Durchbruchsbestimmung der kritischen Gase mittels Gaschromatograph oder Massenspektroskopie. Ebenso sind bekannt die Gravimetrie des Adsorptionsmittels sowie Überwachung und Vergleich von Eingangs- und Ausgangskonzentration.

In J. E. Ellis, et al.: "Metal-organic framework thin films as versatile chemical sensing materials", Zeitschrift Mater. Adv., 2021, 2, Seiten 6169 - 6196, wird beispielsweise die Herstellung und Verwendung von optischen Dünnfilm-Gassensoren auf der Basis von MOF-Werkstoffen beschrieben. Dabei werden MOF-Werkstoffe verwendet, welche unter Gasadsorption ihre Farbe verändern.

### Offenbarung der Erfindung

Eine Aufgabe der Erfindung ist es, ein verbessertes Verfahren zur Erkennung eines Beladungszustands eines Adsorptionselements mit einem Gas anzugeben.

Eine weitere Aufgabe der Erfindung ist es, eine Verwendung eines farbveränderlichen Mediums zur Erkennung eines Beladungszustands eines Adsorptionselements mit einem Gas anzugeben.

Die vorgenannte Aufgabe wird nach einem Aspekt der Erfindung gelöst mit einem Verfahren zur Erkennung eines Beladungszustands eines Adsorptionselements mit einem Gas, wobei das Adsorptionselement einen Mediumkörper mit einem Adsorptionsmittel aufweist, welcher mit einem Fluid, insbesondere Luft, welches das Gas aufweist, angeströmt wird, wobei der Mediumkörper wenigstens bereichsweise ein farbveränderliches Medium aufweist, wobei eine spektrale Farbänderung des farbveränderlichen Mediums abhängig von einem Beladungszustand mit dem Gas bestimmt wird.

Die weitere Aufgabe wird nach einem weiteren Aspekt der Erfindung gelöst mit einer Verwendung eines farbveränderlichen Mediums zur Erkennung eines Beladungszustands eines Adsorptionselements mit einem Gas mit einem Verfahren nach einem der vorhergehenden Ansprüche, wobei das Adsorptionselement einen Mediumkörper mit einem Adsorptionsmittel aufweist, welcher mit einem Fluid, insbesondere Luft, welches das Gas aufweist, angeströmt wird, wobei der Mediumkörper wenigstens bereichsweise das farbveränderliche Medium aufweist, wobei eine spektrale Farbänderung des farbveränderlichen Mediums abhängig von einem Beladungszustand mit dem Gas bestimmt wird.

Günstige Ausgestaltungen und Vorteile der Erfindung ergeben sich aus den weiteren Ansprüchen, der Beschreibung und der Zeichnung.

Nach einem Aspekt der Erfindung wird ein Verfahren zur Erkennung eines Beladungszustands eines Adsorptionselements mit einem Gas vorgeschlagen, wobei das Adsorptionselement einen Mediumkörper mit einem Adsorptionsmittel aufweist, welcher mit einem Fluid, insbesondere Luft, welches das Gas aufweist, angeströmt wird, wobei der Mediumkörper wenigstens bereichsweise ein farbveränderliches Medium aufweist. Dabei wird eine spektrale Farbänderung des farbveränderlichen Mediums abhängig von einem Beladungszustand mit dem Gas bestimmt.

Vorteilhaft kann nach dem vorgeschlagenen Verfahren der Beladungszustand des Adsorptionselements mit einem Gas erkannt werden, bzw. der Zeitpunkt bestimmt werden, zu dem das Adsorptionselement regeneriert werden muss.

Das vorgeschlagene Verfahren nutzt den Effekt der Farbveränderung des farbveränderlichen Mediums aus und ermittelt den Zeitpunkt einer benötigten Regeneration des Adsorptionselements anhand einer Farbmessung des farbveränderlichen Mediums mittels eines Farbsensors beispielsweise im Bereich des sichtbaren Lichts und im Infrarot-Bereich und/oder Ultraviolett-Bereich.

Das farbveränderliche Medium kann beispielsweise in geringen Auftragsmengen auf der Reinseite des Adsorptionselements appliziert werden, beispielsweise als dünne Pulverlage oder Granulatlage oder bevorzugt als Beschichtung einer, sowieso meistens vorhandenen, abströmseitig platzierten Vlieslage. Die Platzierung des farbveränderlichen Mediums auf der Abströmseite eines Gasfilters ist von besonderem Vorteil, da auf diese Weise der Durchbruch des Zielgases durch die Adsorberschicht zuverlässig detektiert werden kann. Dies ermöglicht eine präzise Überwachung der nahenden Erschöpfung der Sorptionskapazität der Adsorberschicht. In diesem Zusammenhang spielt die Massentransferzone (MTZ) eine wesentliche Rolle: Die Länge der MTZ bestimmt, wie lange es dauert, bis das Zielgas die Sorptionsschicht vollständig durchdringt. Durch die Positionierung des farbveränderlichen Mediums hinter der Adsorberschicht wird rechtzeitig erkannt, wann das Gas den Filter zu durchdringen beginnt, was auf die Annäherung an die maximale Aufnahmefähigkeit des Sorptionsmaterials hinweist. Das farbveränderliche Medium dient dabei sowohl zur Überwachung als auch als Durchbruchssensor bzw. Filterwechselanzeige oder Filterregenerationsanzeige, indem der Farbsensor online den Farbumschlag des farbveränderlichen Mediums überwacht und bei einem definierten Farbwert ein Signal ausgibt.

Gemäß einer günstigen Ausgestaltung des Verfahrens kann als farbveränderliches Medium eine metallorganische Gerüstverbindung verwendet werden.

Einige MOF-Werkstoffe beispielsweise ändern ihre Farbe oder Fluoreszenzintensität, wenn sie bestimmte Gase wie CO₂, NH₃ oder H₂O adsorbieren. MOF-Werkstoffe können dabei gezielt zur Erkennung spezifischer Gase ausgewählt werden.

Solche MOF-Werkstoffe können sowohl als Adsorptionsmittel zur Adsorption bestimmter Gase dienen und dabei zugleich eine signifikante Farbänderung mit zunehmender Beladung aufweisen, welche günstig mittels Farbsensoren überwacht und zur Filtertauschanzeige oder zur Regenerationsanzeige vorteilhaft genutzt werden können.

Gemäß einer günstigen Ausgestaltung kann das Verfahren umfassen: Einstrahlen eines Lichtstrahls einer Lichtquelle auf den Mediumkörper; Bestimmen einer Intensität eines von dem Mediumkörper ausgesendeten Lichtstrahls mittels eines Lichtsensors in wenigstens einem Wellenlängenbereich; und Auswerten eines von dem Lichtsensor generierten Signals mittels einer Recheneinheit und Ausgeben eines Bewertungssignals. Mit einer solchen Anordnung können Farbänderungen des farbveränderlichen Mediums an dem Mediumkörper vorteilhaft erkannt werden.

Gemäß einer günstigen Ausgestaltung des Verfahrens kann der von dem Mediumkörper ausgesendete Lichtstrahl ein Fluoreszenzsignal sein. Alternativ zum rückgestrahlten Licht kann auch Fluoreszenzlicht vorteilhaft zum Erkennen einer Farbänderung des farbveränderlichen Mediums an dem Mediumkörper eingesetzt werden.

Gemäß einer günstigen Ausgestaltung des Verfahrens kann eine spektrale Farbänderung in einem Bereich des sichtbaren Lichts, und/oder in einem Infrarotbereich, und/oder in einem Ultraviolettbereich bestimmt werden. Spektrale Farbänderungen über einen großen Wellenlängenbereich können so vorteilhaft zur Erkennung einer Beladung des Adsorptionselements verwendet werden.

Gemäß einer günstigen Ausgestaltung des Verfahrens kann die Intensität des von dem Mediumkörper ausgesendeten Lichtstrahls in wenigstens einem Wellenlängenbereich als Funktion einer Zeit bestimmt werden. So kann die Änderung der Intensität über die Zeit gezielt zur Überwachung des Adsorptionselements auf seinen Beladungszustand sowie zu einer Anzeige für einen Filterwechsel oder eine anstehende Regeneration genutzt werden.

Gemäß einer günstigen Ausgestaltung des Verfahrens kann der Mediumkörper quer zu einer Strömungsrichtung des Fluids angeordnet und von einer rohseitigen Eintrittsfläche zu einer reinseitigen Austrittsfläche durchströmt werden. Dabei kann bei gleichzeitiger Filterwirkung beispielsweise zur Feinstaubfilterung eine Überwachung eines in dem Mediumkörper angeordneten Adsorptionsmittels auf seinen Beladungszustand mit einem Gas durchgeführt werden.

Gemäß einer günstigen Ausgestaltung des Verfahrens kann das farbveränderliche Medium an der Eintrittsfläche und/oder an der Austrittsfläche und/oder in einem inneren Bereich des Mediumkörpers angeordnet werden. Auf diese Weise kann gezielt ein Beladungszustand an der Oberfläche oder über die Tiefe des Mediumkörpers überwacht werden.

Gemäß einer günstigen Ausgestaltung des Verfahrens kann das farbveränderliche Medium an dem Adsorptionsmittel angeordnet werden oder als Adsorptionsmittel vorliegen. Vorteilhaft kann das farbveränderliche Medium auf das Adsorptionsmittel aufgebracht werden, beispielsweise durch Beschichten mit dem farbveränderlichen Medium. Alternativ ist auch möglich, das farbveränderliche Medium selbst als Adsorptionsmittel zu verwenden.

Gemäß einer günstigen Ausgestaltung des Verfahrens kann das farbveränderliche Medium in Form einer Pulverlage oder Granulatlage angeordnet werden. So kann das farbveränderliche Medium als dünne Lage auf das Adsorptionselement appliziert werden.

Gemäß einer günstigen Ausgestaltung des Verfahrens kann eine, insbesondere abströmseitig angeordnete, Vlieslage des Mediumkörpers mit dem farbveränderlichen Medium beschichtet werden. Solche Vlieslagen werden üblicherweise verwendet, um das Adsorptionsmittel einzuhüllen und können dadurch auch beispielsweise mit dem farbveränderlichen Medium beschichtet werden, um den Beladungszustand zu erkennen.

Gemäß einer günstigen Ausgestaltung des Verfahrens können die Lichtquelle und der Lichtsensor in einem Farbsensor integriert werden. Insbesondere können die Lichtquelle und der Lichtsensor und die Recheneinheit in dem Farbsensor integriert werden. Auf diese Weise kann vorteilhaft eine kompakte Detektionseinheit für das Erkennen des Beladungszustands des Adsorptionselements geschaffen werden.

Gemäß einer günstigen Ausgestaltung des Verfahrens kann der Farbsensor an der Austrittsfläche des Adsorptionselements angeordnet werden. Dadurch kann insbesondere vorteilhaft ein Beladungszustand bei vollständiger Beladung des Adsorptionselements erkannt werden.

Nach einem weiteren Aspekt der Erfindung wird eine Verwendung eines farbveränderlichen Mediums zur Erkennung eines Beladungszustands eines Adsorptionselements mit einem Gas mit einem oben beschriebenen Verfahren vorgeschlagen, wobei das Adsorptionselement einen Mediumkörper mit einem Adsorptionsmittel aufweist, welcher mit einem Fluid, insbesondere Luft, welches das Gas aufweist, angeströmt wird, wobei der Mediumkörper wenigstens bereichsweise das farbveränderliche Medium aufweist. Dabei wird eine spektrale Farbänderung des farbveränderlichen Mediums abhängig von einem Beladungszustand mit dem Gas bestimmt.

Vorteilhaft kann so der Beladungszustand des Adsorptionselements mit einem Gas erkannt werden, bzw. der Zeitpunkt bestimmt werden, zu dem das Adsorptionselement regeneriert werden muss.

Der Effekt der Farbveränderung des farbveränderlichen Mediums kann ausgenutzt werden und ein Zeitpunkt einer benötigten Regeneration des Adsorptionselements anhand einer Farbmessung des farbveränderlichen Mediums mittels eines Farbsensors beispielsweise im Bereich des sichtbaren Lichts und im Infrarot-Bereich und/oder Ultraviolett-Bereich ermittelt werden.

Das farbveränderliche Medium kann beispielsweise in geringen Auftragsmengen auf der Reinseite des Adsorptionselements appliziert werden, beispielsweise als dünne Pulverlage oder Granulatlage oder bevorzugt als Beschichtung einer, sowieso meistens vorhandenen, abströmseitig platzierten Vlieslage. Das farbveränderliche Medium dient dabei sowohl zur Überwachung als auch als Durchbruchssensor bzw. Filterwechselanzeige oder Filterregenerationsanzeige, indem der Farbsensor online den Farbumschlag des farbveränderlichen Mediums überwacht und bei einem definierten Farbwert ein Signal ausgibt.

Gemäß einer günstigen Ausgestaltung kann das farbveränderliche Medium eine metallorganische Gerüstverbindung sein.

Einige MOF-Werkstoffe beispielsweise ändern ihre Farbe oder Fluoreszenzintensität, wenn sie bestimmte Gase wie CO₂, NH₃ oder H₂O adsorbieren. MOF-Werkstoffe können dabei gezielt zur Erkennung einzelner Gase ausgewählt werden.

Solche MOF-Werkstoffe können sowohl als Adsorptionsmittel zur Adsorption bestimmter Gase dienen und weisen dabei zugleich eine signifikante Farbänderung mit zunehmender Beladung auf, welche günstig mittels Farbsensoren überwacht und zur Filtertauschanzeige oder zur Regenerationsanzeige vorteilhaft genutzt werden können.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen beispielhaft:
- Figur 1: eine Darstellung einer spektralen Änderung in MOF-Werkstoffen aufgrund einer Adsorption eines Gases;
- Figur 2: eine schematische Darstellung eines Verfahrens zur Erkennung eines Beladungszustands eines Adsorptionselements mit einem Gas nach einem Ausführungsbeispiel der Erfindung;
- Figur 3: eine schematische Darstellung des Verfahrens mit einem Adsorptionselement nach einem weiteren Ausführungsbeispiel der Erfindung; und
- Figur 4: eine Detailansicht eines Teils des Adsorptionselements nach Fig. 3.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

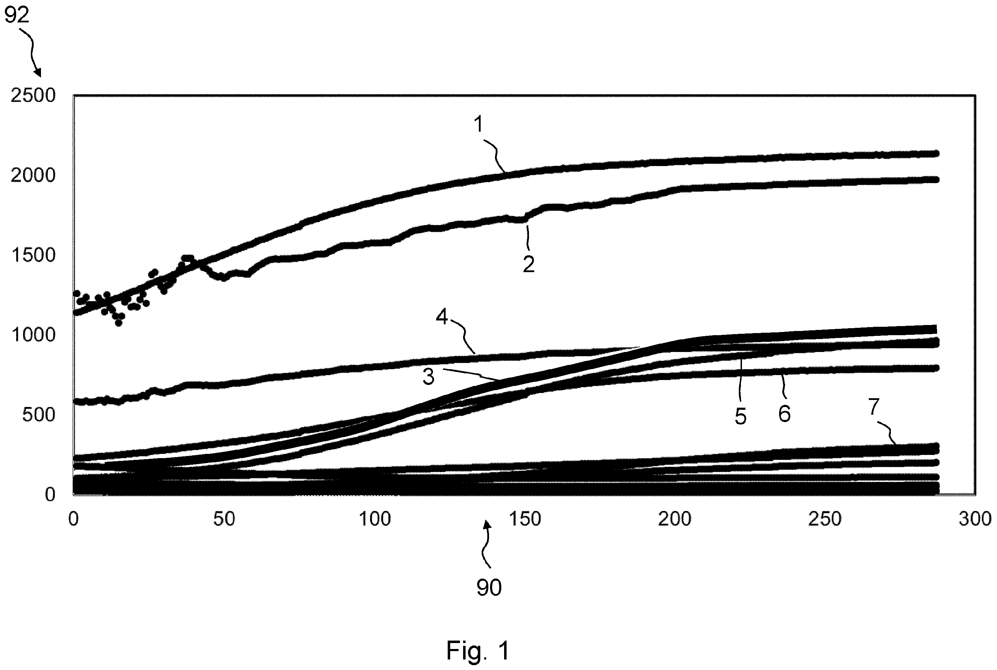

Zur Erläuterung der Erfindung zeigt Figur 1 eine Darstellung einer spektralen Änderung in MOF-Werkstoffen aufgrund einer Adsorption eines Gases.

Dabei sind Intensitätswerte 92 skaliert in mW/cm² als Funktion der Zeit 90 in Sekunden aufgetragen. Die Linien 1, 2, 3, 4, 5, 6, 7 stellen Intensitätswerte für verschiedene Wellenlängenbereiche dar. Linie 1 stellt einen Wellenlängenbereich um 460 nm dar, Linie 2 einen Wellenlängenbereich um 410 nm, Linie 3 einen Wellenlängenbereich um 510 nm, Linie 4 einen Wellenlängenbereich um 435 nm, Linie 5 einen Wellenlängenbereich um 535 nm, Linie 6 einen Wellenlängenbereich um 485 nm, Linie 7 einen Wellenlängenbereich um 535 nm.

Dabei ist erkennbar, dass beispielsweise die Wellenlängenbereiche der Linien 1 (460 nm) und Linie 2 (410 nm) sich relativ stark mit zunehmender Zeitdauer und damit einhergehender Beladung der Werkstoffe ändern. An derartig starken Änderungen kann ein Beladungszustand deshalb besonders gut detektiert werden.

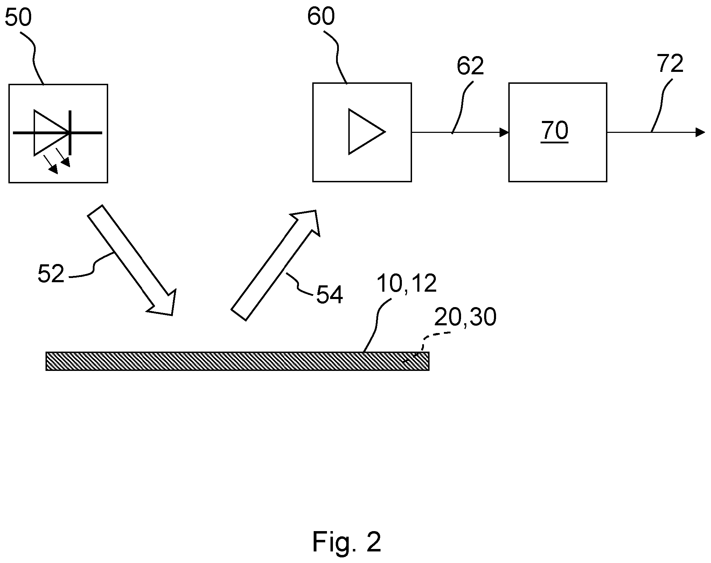

Figur 2 zeigt eine schematische Darstellung eines Verfahrens zur Erkennung eines Beladungszustands eines Adsorptionselements 10 mit einem Gas nach einem Ausführungsbeispiel der Erfindung.

Das Adsorptionselement 10 weist einen flachen Mediumkörper 12 mit einem Adsorptionsmittel 20 auf, welcher mit einem Fluid, insbesondere Luft, welches das Gas aufweist, angeströmt wird.

Weiter weist der Mediumkörper 12 wenigstens bereichsweise ein farbveränderliches Medium 30 auf, welches seine Farbe mit einem Zustand einer Beladung mit dem Gas ändert.

Mittels einer Bestimmung einer spektralen Farbänderung des farbveränderlichen Mediums 30 kann so ein Beladungszustand des Adsorptionselements 10 mit dem Gas bestimmt werden.

Als farbveränderliches Medium 30 kann dabei vorteilhaft eine metallorganische Gerüstverbindung, ein sogenannter MOF-Werkstoff, verwendet werden.

Gemäß dem Verfahren wird dabei ein Lichtstrahl 52 einer Lichtquelle 50 auf den Mediumkörper 12 eingestrahlt. Von der reflektierenden Oberfläche des Mediumkörpers 12 wird dann ein Lichtstrahl 54 ausgestrahlt, dessen Intensität mittels eines Lichtsensors 60 in wenigstens einem Wellenlängenbereich bestimmt werden kann. Ein von dem Lichtsensor 60 generiertes Signal 62 kann mittels einer Recheneinheit 70 ausgewertet werden und daraufhin ein Bewertungssignal 72 für den Beladungszustand des Adsorptionselements 10 ausgegeben werden.

Der von dem Mediumkörper 12 ausgesendete Lichtstrahl 54 kann einfach ein rückgestrahlter Lichtstrahl sein. Alternativ kann der ausgesendete Lichtstrahl 54 auch durch Fluoreszenz als Wechselwirkung des einfallenden Lichtstrahls 52 mit dem farbveränderlichen Medium 30 entstehen und ein Fluoreszenzsignal sein.

Die spektrale Farbänderung kann dabei vorteilhaft in einem Bereich des sichtbaren Lichts, und/oder in einem Infrarotbereich, und/oder in einem Ultraviolettbereich bestimmt werden.

Zum Erkennen des Beladungszustands des Adsorptionselements 10 kann so die Intensität des von dem Mediumkörper 12 ausgesendeten Lichtstrahls 54 in wenigstens einem Wellenlängenbereich als Funktion einer Zeit 90 bestimmt werden.

Das farbveränderliche Medium 30 kann an dem Adsorptionsmittel 20 angeordnet sein oder selbst als Adsorptionsmittel 20 vorliegen.

Das farbveränderliche Medium 30 kann in Form einer Pulverlage oder Granulatlage an dem Adsorptionselement 10 angeordnet sein.

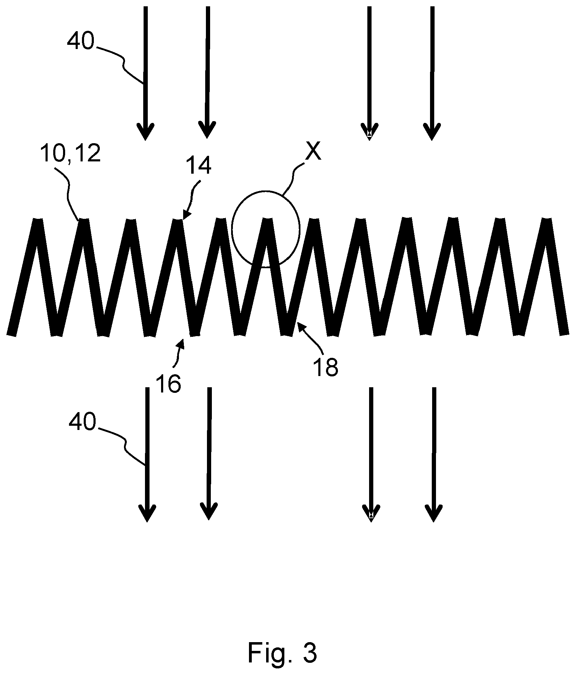

Figur 3 zeigt eine schematische Darstellung des Verfahrens mit einem Adsorptionselement 10 nach einem weiteren Ausführungsbeispiel der Erfindung.

Das Adsorptionselement 10 ist dabei als zickzack-gefaltetes Flachfilterelement ausgebildet.

Der Mediumkörper 12 ist quer zu einer Strömungsrichtung 40 (angedeutet durch Pfeile) des Fluids angeordnet und wird von einer rohseitigen Eintrittsfläche 14 zu einer reinseitigen Austrittsfläche 18 durchströmt.

Das farbveränderliche Medium 30 kann dabei an der Eintrittsfläche 14 und/oder an der Austrittsfläche 18 und/oder in einem inneren Bereich 16 des Mediumkörpers 12 angeordnet sein. Je nachdem kann so ein früher Beladungszustand, bei Anbringen an der Eintrittsfläche 14, oder ein später Beladungszustand, bei Anbringen an der Austrittsfläche 18, oder ein mittlerer Beladungszustand, bei Anbringen im Volumen des Mediumkörpers 12, bestimmt werden.

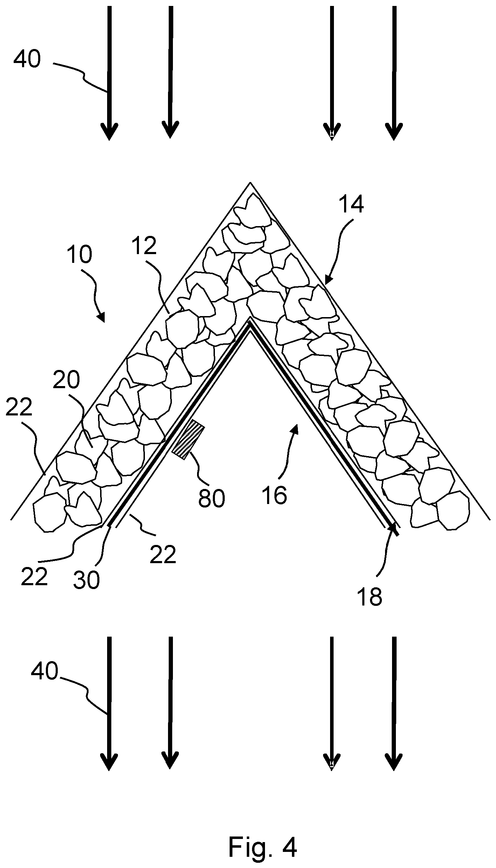

In Figur 4 ist eine Detailansicht eines Teils des Adsorptionselements 10 nach Figur 3 dargestellt.

Das Adsorptionselement 10 weist dabei einen Mediumkörper 12 auf, welcher ein Adsorptionsmittel 20 zwischen Vlieslagen 22 eingebettet enthält. Das Adsorptionsmittel 20 kann dabei beispielsweise eine Schüttung von Aktivkohlepartikeln darstellen.

Eine abströmseitig angeordnete Vlieslage 22 des Mediumkörpers 12 kann so mit dem farbveränderlichen Medium 30 beschichtet sein, dass deren Farbänderungen mit dem Beladungszustand detektiert werden können.

Die Lichtquelle 50 und der Lichtsensor 60, und optional auch die Recheneinheit 70, können vorteilhaft in einem Farbsensor 80 integriert sein, welcher an der Austrittsfläche 18 des Adsorptionselements 10 angeordnet wird.

Mit dem Farbsensor 80 kann vorteilhaft eine spektrale Farbänderung des farbveränderlichen Mediums 30 abhängig von dem Beladungszustand mit dem Gas bestimmt werden.

Auf diese Weise kann der Beladungszustand des Adsorptionselements 10 mit dem Gas günstig bestimmt werden. Der integrierte Farbsensor 80 stellt dabei eine sehr kompakte und vorteilhafte Lösung zur Integration der Erkennung des Beladungszustands in das Adsorptionselement 10 dar.

### Bezugszeichen

- 1: 460 nm
- 2: 410 nm
- 3: 510 nm
- 4: 435 nm
- 5: 535 nm
- 6: 485 nm
- 7: 560 nm
- 10: Adsorptionselement
- 12: Mediumkörper
- 14: Eintrittsfläche
- 16: Bereich
- 18: Austrittsfläche
- 20: Adsorptionsmittel
- 22: Vlieslage
- 30: farbveränderliches Medium
- 40: Strömungsrichtung
- 50: Lichtquelle
- 52: einfallender Lichtstrahl
- 54: ausfallender Lichtstrahl
- 60: Lichtsensor
- 62: Signal
- 70: Recheneinheit
- 72: Bewertung
- 80: Farbsensor
- 90: Zeit
- 92: Intensität

## Patentansprüche

1. Verfahren zur Erkennung eines Beladungszustands eines Adsorptionselements (10) mit einem Gas, wobei das Adsorptionselement (10) einen Mediumkörper (12) mit einem Adsorptionsmittel (20) aufweist, welcher mit einem Fluid, insbesondere Luft, welches das Gas aufweist, angeströmt wird,
wobei der Mediumkörper (12) wenigstens bereichsweise ein farbveränderliches Medium (30) aufweist,
wobei eine spektrale Farbänderung des farbveränderlichen Mediums (30) abhängig von einem Beladungszustand mit dem Gas bestimmt wird.

2. Verfahren nach Anspruch 1, wobei als farbveränderliches Medium (30) eine metallorganische Gerüstverbindung verwendet wird.

3. Verfahren nach Anspruch 1 oder 2, umfassend
Einstrahlen eines Lichtstrahls (52) einer Lichtquelle (50) auf den Mediumkörper (12);
Bestimmen einer Intensität eines von dem Mediumkörper (12) ausgesendeten Lichtstrahls (54) mittels eines Lichtsensors (60) in wenigstens einem Wellenlängenbereich;
Auswerten eines von dem Lichtsensor (60) generierten Signals (62) mittels einer Recheneinheit (70) und Ausgeben eines Bewertungssignals (72).

4. Verfahren nach einem der vorhergehenden Ansprüche, wobei der von dem Mediumkörper (12) ausgesendete Lichtstrahl (54) ein Fluoreszenzsignal ist.

5. Verfahren nach einem der vorhergehenden Ansprüche, wobei eine spektrale Farbänderung in einem Bereich des sichtbaren Lichts, und/oder in einem Infrarotbereich, und/oder in einem Ultraviolettbereich bestimmt wird.

6. Verfahren nach einem der vorhergehenden Ansprüche, wobei die Intensität des von dem Mediumkörper (12) ausgesendeten Lichtstrahls (54) in wenigstens einem Wellenlängenbereich als Funktion einer Zeit (90) bestimmt wird.

7. Verfahren nach einem der vorhergehenden Ansprüche, wobei der Mediumkörper (12) quer zu einer Strömungsrichtung (40) des Fluids angeordnet und von einer rohseitigen Eintrittsfläche (14) zu einer reinseitigen Austrittsfläche (18) durchströmt wird.

8. Verfahren nach Anspruch 7, wobei das farbveränderliche Medium (30) an der Eintrittsfläche (14) und/oder an der Austrittsfläche (18) und/oder in einem inneren Bereich (16) des Mediumkörpers (12) angeordnet wird.

9. Verfahren nach einem der vorhergehenden Ansprüche, wobei das farbveränderliche Medium (30) an dem Adsorptionsmittel (20) angeordnet wird oder als Adsorptionsmittel (20) vorliegt.

10. Verfahren nach einem der vorhergehenden Ansprüche, wobei das farbveränderliche Medium (30) in Form einer Pulverlage oder Granulatlage angeordnet wird.

11. Verfahren nach einem der vorhergehenden Ansprüche, wobei eine, insbesondere abströmseitig angeordnete, Vlieslage (22) des Mediumkörpers (12) mit dem farbveränderlichen Medium (30) beschichtet wird.

12. Verfahren nach einem der Ansprüche 3 bis 11, wobei die Lichtquelle (50) und der Lichtsensor (60) in einem Farbsensor (80) integriert werden,
insbesondere wobei die Lichtquelle (50) und der Lichtsensor (60) und die Recheneinheit (70) in dem Farbsensor (80) integriert werden.

13. Verfahren nach Anspruch 12, wobei der Farbsensor (80) an der Austrittsfläche (18) des Adsorptionselements (10) angeordnet wird.

14. Verwendung eines farbveränderlichen Mediums (30) zur Erkennung eines Beladungszustands eines Adsorptionselements (10) mit einem Gas mit einem Verfahren nach einem der vorhergehenden Ansprüche, wobei das Adsorptionselement (10) einen Mediumkörper (12) mit einem Adsorptionsmittel (20) aufweist, welcher mit einem Fluid, insbesondere Luft, welches das Gas aufweist, angeströmt wird,
wobei der Mediumkörper (12) wenigstens bereichsweise das farbveränderliche Medium (30) aufweist,
wobei eine spektrale Farbänderung des farbveränderlichen Mediums (30) abhängig von einem Beladungszustand mit dem Gas bestimmt wird.

15. Verwendung nach Anspruch 14, wobei das farbveränderliche Medium (30) eine metallorganische Gerüstverbindung ist.
